# EUROPEAN PATENT APPLICATION

(11) **EP 2 290 842 A2**
(43) Date of publication of application: **02.03.2011**
(21) Application number: 10174136.1
(22) Date of filing: 26.08.2010
(51) Int. Cl.: H04B 7/185

(54) **Service providing system and method in a satellite communication system by allocating resources and power to hierarchical antenna multi beams**

(30) Priority: 27.08.2009 KR 20090079759; 03.06.2010 KR 20100052257
(71) Applicant: Electronics and Telecommunications Research Institute, Daejeon 305-700 (KR)
(72) Inventor: Kim, Hee-Wok, 305-308, Daejeon (KR); Kang, Kunseok, 305-804, Daejeon (KR); Ahn, Do-Seob, 305-762, Daejeon (KR); Lee, Ho-Jin, 305-761, Daejeon (KR)
(74) Representative: Betten & Resch

(57) **Abstract**

A service providing method in a satellite communication system includes: receiving service request signals from terminals which exist in a service area and are to receive the communication service; calculating the total traffic volume within the service area by using the service request signals; forming hierarchical multi beams which cover the calculated traffic volume to provide a service to the terminals; and allocating resources and power to the formed hierarchical multi beams, transmitting the resource and power allocation information to the terminals through control channels, and providing the service to the terminals through the formed hierarchical multi beams by using the allocated resources and power.

## Description

### CROSS-REFERENCE(S) TO RELATED APPLICATIONS

The present application claims priority of Korean Patent Application Nos. 10-2009-0079759 and 10-2010-0052257, filed on August 27, 2009, and June 3, 2010, respectively, which are incorporated herein by reference in their entirety.

### BACKGROUND OF THE INVENTION

### Field of the Invention

Exemplary embodiments of the present invention relate to a satellite communication system; and, more particularly, to a service providing system and method which effectively uses limited resources and power to provide a communication service to a multi-service area and multiple users in a satellite communication system in which the multi-service area and the multiple users exist.

### Description of Related Art

Regarding the next generation communication systems, much research has been actively conducted to provide services having a variety of quality of service (QoS) to users at high transmission rates. A satellite communication system has been proposed as an example of the next generation communication systems. The satellite communication system provides a service to a multi-service area in which a plurality of service areas are implemented. A plurality of users, that is, a plurality of terminals, existing in the multi-service area receive services having a variety of QoS, which are provided from the satellite communication system at a high speed.

Regarding the satellite communication system, a variety of methods have been proposed to stably provide a large-capacity service having a variety of QoS to terminals existing in a multi-service area through available limited resources at a high speed. In particular, a service providing method based on multi-beams has been proposed to increase the total capacity of the satellite communication system when providing a service through the limited resources, and increase the signal transmission efficiency of the communication system, for example, the Effective Isotropic Radiated Power (EIRP) when transmitting signals at limited usable power of the communication satellite system. The satellite communication system providing a service based on multi-beams acquires a diversity gain when providing the service to terminals existing in a multi-service area, and the terminals more stably receive the service through the diversity gain.

As described above, however, when the satellite communication system provides a multi-beam based service to the plurality of terminals existing in the multi-service area, interference may not only occur among the service areas composing the multi-service area, but may also occur among the terminals existing in the multi-service area. In particular, when the satellite communication system provides a service by transmitting signals through multi-beams, larger interference may occur among terminals existing at the boundary area between the multi-beams. In order to minimize such interference, a method of dividing and using a limited resource, for example, a frequency, for each service area, each terminal, or each multi-beam has been proposed. However, such a method has a problem in that the use efficiency of the limited resource may be lowered.

Furthermore, as a larger number of users request a large-capacity high-speed service, for example, a high-quality multimedia service, the satellite communication system should provide a large-capacity high-speed service through a wideband in correspondence to the users' requests, for example, users' traffic requirements. However, an available resource through which the satellite communication system provides a high-speed service, for example, an allocable frequency bandwidth is limited as described above. Therefore, there is a demand for a method which is capable of providing a large-capacity high-speed service by making the most of the limited allocable bandwidth.

When the satellite communication system provides a large-capacity high-speed service based on multi-beams through the limited allocable frequency bandwidth, there is a demand for a method which provides a large-capacity high-speed service by minimizing interference occurring in a multi-service area and users, in particular, interference occurring at the boundary area between multi-beams, and stably provides a large-capacity high-speed service by maximizing the resource use efficiency and the power use efficiency of the satellite communication system when providing the service.

### SUMMARY OF THE INVENTION

An embodiment of the present invention is directed to a service providing system and method for providing a communication service in a satellite communication system.

Another embodiment of the present invention is directed to a service providing system and method in a satellite communication system, which provides a service based on multi-beams to a plurality of users existing in a multi service area.

Another embodiment of the present invention is directed to a service providing system and method in a satellite communication system, which minimizes the interference occurring in a multi service area and a plurality of users, when providing high-speed high-capacity service based on multi-beams.

Another embodiment of the present invention is directed to a service providing system and method in a satellite communication system, which stably provides a high-speed high-capacity service through limited resources by minimizing the interference between the edge areas of multi-beams.

Another embodiment of the present invention is directed to a service providing system and method in a satellite communication system, which minimizes the interference by making the most of allocable limited frequency bands through multi-beams.

Another embodiment of the present invention is directed to a service providing system and method in a satellite communication system, which reduces the power consumption of the system by providing a service through multi-beams having a variety of coverage sizes.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

In accordance with an embodiment of the present invention, a service providing method in a satellite communication system includes: receiving service request signals from terminals which exist in a service area and are to receive the communication service; calculating the total traffic volume within the service area by using the service request signals; forming hierarchical multi beams which cover the calculated traffic volume to provide a service to the terminals; and allocating resources and power to the formed hierarchical multi beams, transmitting the resource and power allocation information to the terminals through control channels, and providing the service to the terminals through the formed hierarchical multi beams by using the allocated resources and power.

In accordance with another embodiment of the present invention, a service providing system in a satellite communication system includes: a plurality of terminals existing in a service area and configured to access the satellite communication system by using one scheme of a first communication scheme and a second communication scheme using an ancillary terrestrial component (ATC) or a network; and a satellite base station configured to receive service request signals from the terminals to receive the service in the service area, calculate the total traffic volume in the service area by using the service request signals, and providing the service to the service area through hierarchical multi beams covering the calculated total traffic volume.

### BRIEF DESCRIPTION OF THE DRAWINGS

Fig. 1 is a diagram schematically illustrating the structure of a service providing system in a satellite communication system in accordance with an embodiment of the present invention.

Fig. 2 is a diagram schematically illustrating a hierarchical multi-beam pattern of the satellite communication system in accordance with the embodiment of the present invention.

Fig. 3 is a diagram schematically illustrating another hierarchical multi-beam pattern of the satellite communication system in accordance with the embodiment of the present invention.

Fig. 4 is a diagram schematically illustrating another hierarchical multi-beam pattern of the satellite communication system in accordance with the embodiment of the present invention.

Fig. 5 is a diagram schematically illustrating another hierarchical multi-beam pattern of the satellite communication system in accordance with the embodiment of the present invention.

Fig. 6 is a diagram schematically illustrating another hierarchical multi-beam pattern of the satellite communication system in accordance with the embodiment of the present invention.

Fig. 7 is a diagram schematically illustrating another hierarchical multi-beam pattern of the satellite communication system in accordance with the embodiment of the present invention.

Fig. 8 is a diagram schematically illustrating the channel structure of the satellite communication system in accordance with the embodiment of the present invention.

Fig. 9 is a diagram schematically showing the frame structure of the satellite communication system in accordance with the embodiment of the present invention.

Fig. 10 is a flowchart explaining the operation for providing the communication service in the satellite communication system in accordance with the embodiment of the present invention.

### DESCRIPTION OF SPECIFIC EMBODIMENTS

Exemplary embodiments of the present invention will be described below in more detail with reference to the accompanying drawings. The present invention may, however, be embodied in different forms and should not be constructed as limited to the embodiments set forth herein. Rather, these embodiments are provided so that this disclosure will be thorough and complete, and will fully convey the scope of the present invention to those skilled in the art.

Exemplary embodiments of the present invention provide a system and method for providing a communication service in a satellite communication system. Exemplary embodiments of the present invention provide a system and method for providing a communication service through hierarchical multi-beams to improve the use efficiency of available limited frequency resource and power when providing the communication service. Furthermore, exemplary embodiments of the present invention provide a service providing system and method for providing a service based on multi-beams to a plurality of users existing in a multi-service area including a plurality of service areas, that is, a plurality of terminals within a multi-service area. In the exemplary embodiments of the present invention, the following descriptions will be focused on a configuration in which the satellite communication system provides a service through multi-beams. However, the service providing system and method in accordance with the exemplary embodiments of the present invention may also be applied to other wireless communication systems.

In the exemplary embodiments of the present invention, the satellite communication system provides the communication service by forming multi-beams having a variety of coverage sizes, in order to satisfy various requests from a plurality of users existing in a multi-service area, that is, various user traffic requirements while improving the frequency use efficiency and power efficiency of the satellite communication system. In other words, the satellite communication system forms multi-beams having various coverage sizes depending on user traffic volumes, that is, hierarchical multi-beams, and provides a communication service by adaptively satisfying the user traffic requirements while improving the power use efficiency through the formed hierarchical multi-beams.

In the exemplary embodiments of the present invention, the satellite communication system using multi-beams forms hierarchical multi-beams as multi-beams having various coverage sizes depending on user traffic volumes, when providing a communication service to users. For example, in an area where a user traffic volume is small or the number of users to receive the communication service is small, the satellite communication system forms a beam having a large coverage size among the hierarchical multi-beams, that is, the highest-level beam. Furthermore, in an area where a user traffic volume is large or the number of users to receive the communication service, the satellite communication system forms a beam having a small coverage size. For convenience of descriptions, the hierarchical multi-beams used by the satellite communication system are divided into a first beam corresponding to the highest-level beam having the largest coverage size, a second beam having a smaller coverage size than the first beam, and a third beam corresponding to the lowest-level beam having the smallest coverage size. The first beam may be referred to as a global beam, the second beam may be referred to as a regional beam, and the third beam may be referred to as a spot beam. In the exemplary embodiments of the present invention, the hierarchical multi-beams are divided into three kinds of beams, as described above. Depending on the communication environments and the coverages of service areas, however, two or more kinds of beams may be formed to provide the communication service.

In the satellite communication system in accordance with the exemplary embodiments of the present invention, a satellite base station providing a communication service monitors the distribution and traffic volumes of terminals which are to receive the communication in the entire coverage, in order to decide which kind of beam coverage to form when providing a communication service to a plurality of users existing in a multi-service area, that is, the terminals. A terminal existing in the multi-service area transmits a service request signal to the satellite base station through a spot beam upward link covering the area where the terminal is located. At this time, the service request signal which the terminal transmits to the satellite base station includes traffic information requested by the terminal.

In the satellite communication system in accordance with the exemplary embodiments of the present invention, the satellite base station calculates the number of users to receive a communication service and a requested traffic volume for each level beam. The satellite base station compares a traffic volume requested in the beam having the largest coverage size, for example, the global beam with the capacity of the global beam. When the traffic volume does not exceed the capacity of the global beam, the satellite base station provides the communication service by performing communication through the global beam. When the traffic volume exceeds the capacity of the global beam, the satellite base station compares the requested traffic volume with the capacity of the regional beam. When the traffic volume does not exceed the capacity of the regional beam, the satellite base station provides the communication service by performing communication through the regional beam. When the traffic volume exceeds the capacity of the regional beam, the satellite base station provides the communication service by performing communication through the spot beam.

In the exemplary embodiments of the present invention, the hierarchical multi-beams are divided into the global beam, the regional beam, and the spot beam, as described above. Therefore, the comparison between the requested traffic volume and the capacities of the hierarchical multi-beams is performed only for the global beam, the regional beam, and the spot beam. However, when the hierarchical multi-beams have a larger number of coverage sizes, that is, when the hierarchical multi-beams are divided into four or more beams, the comparison between the requested traffic volume and the capacities of the hierarchical multi-beams is sequentially performed for the respective coverage sizes.

In the exemplary embodiments of the present invention, when the satellite communication system provides a communication service by using the hierarchical multi-beams, the respective beams satisfy the QoS requested by a user. Furthermore, the satellite communication system allocates an available frequency resource and power such that the use efficiency of the frequency resource and power is maximized, and transmits the resource and power allocation information in the hierarchical multi-beams to terminals attempting communication.

In the exemplary embodiments of the present invention, the satellite communication system allocates the frequency resource of the spot beam having the smallest coverage size in correspondence to a frequency reuse factor used by the satellite communication system, in order to allow the frequency reuse between adjacent beams having different coverage sizes in the hierarchical multi-beams. Furthermore, the satellite communication system allocates the frequency resource such that a beam having a large coverage size does not use a frequency resource used by a beam having a small coverage size. Furthermore, the satellite communication system forms the hierarchical multi-beams such that beams having a large coverage size do not overlap each other, in order to allow the frequency reuse between the adjacent beams having different coverage sizes. In the multi-beams formed in such a manner, a frequency resource other than the frequency resource allocated to the beam having a small coverage size is reused with a frequency reuse factor of 1.

In the exemplary embodiments of the present invention, when the satellite communication system transmits a signal to terminals existing in the central areas and the edge areas of the multi-beams through time multiplexing to provide a communication service, the signal transmission period to the terminals existing in the center areas of the multi-beams may be frequency-multiplexed, and the signal may be transmitted to the terminals existing in the center areas and the edge areas through the frequency multiplexing. In this case, an ATC servicing as a repeater to relay signals between the satellite base station and the terminals transmits the signal to the terminals by using the same subcarrier group in the same frequency band as the frequency band used by the satellite base station. At this time, the ATC does not interfere in the signals transmitted by the satellite base station and the terminals.

In the exemplary embodiments of the present invention, when the satellite communication system using a frequency reuse factor of 1 based on Orthogonal Frequency Division Multiple Access (OFDMA) forms the hierarchical multi-beams to provide a communication service, the satellite communication system uses the frequency reuse factor of 1 in the center areas of beams, and partially reuses a plurality of frequency band groups in the edge areas of beams, regardless of different level beams. The satellite communication system divides the frequency band groups used in different level beams in the edge areas of beams. The satellite communication system uses one frequency band group as the frequency reuse factor of 1 in the beam having a large coverage size, and partially reuses the other frequency band groups in the beam having a small coverage size.

The satellite communication system in accordance with the embodiments of the present invention may use a Complementary Terrestrial Component (CTC) such as a repeater, a Complementary Ground Component (CGC), and an Ancillary Terrestrial Component (ATC). The satellite communication system may include a Digital Multimedia Broadcasting (DMB) service, a Digital Video Broadcasting-Satellite services to Handholds (DVB-SH) system to provide a broadcasting service, and a terrestrial satellite integrated system of Mobile Satellite Ventures (MSV) and TerreStar as a Mobile satellite service (MSS) system for providing voice and data communications in urban areas and suburbs using the ATC.

The satellite DMB system is designed to additionally adopt a terrestrial network using both a satellite and the same channel gapfiller to thereby enable a user to receive enhanced audio signals and multimedia signals using a receiver for a vehicle, a fixed terminal, or a mobile terminal. The satellite DMB system may be optimized in a band of 2630 MHz to 2655 MHz of the satellite and a terrestrial part. The satellite DMB system may include a feeder link earth station, a broadcasting satellite, two types of terrestrial repeaters, and a receiver, for example, a receiver for a vehicle, a fixed terminal, or a mobile terminal. Signals may be transmitted to the satellite via the feeder link earth station. In this instance, a Fixed Satellite Service (FSS) band, for example, 14 GHz may be used for an upward link. The received signals may be converted to the band of 2.6 GHz in the satellite, and be amplified to a desired level through an amplifier of a satellite repeater and thereby be broadcast to a service area. A terminal which is to receive the broadcasting service from the satellite DMB system may need to receive signals via a miniature antenna with a low directivity. For this, there is a need for a sufficient level of equivalent isotropically radiated power. Therefore, the satellite DMB system may need to include a large transmission antenna and a high power repeater. Major shortcomings found from signal propagation in the band of 2.6 GHz may include an obstacle in a direct path from the satellite, and a shadowing. To overcome the shortcomings, a repeater to retransmit a satellite signal is added in a system design. This repeater is in charge of a portion occluded by an obstacle, for example, a building and the like. The repeater may be classified into a direct amplification repeater and a frequency converting repeater. The direct amplification repeater simply amplifies a broadcast signal of 2.6 GHz. Generally, a low gain amplifier may be used to avoid an unnecessary emission caused by signal interference between a receive antenna and a transmit antenna. The low gain amplifier is in charge of a relatively small region of up to 500 m based on a Line of Sight (LOS). The frequency converting repeater is in charge of a relatively large region of up to 3 km, and may convert the received signal of 2.6 GHz to a signal of a different frequency band, for example, 11 GHz and thereby transmit the converted signal. In this environment, a multi-path fading phenomenon where at least two signals are received may occur. In order to stably receive a multi-path fading signal, the satellite DMB system may use a rake receiver that is applied with a Code Division Multiplexing (CDM) technology.

The DVB-SH system countries may be a system that uses a satellite in the nationwide coverage and also uses a CGC in an indoor environment or a terrestrial coverage. The DVB-SH system aims to provide a mobile TV service in the bandwidth of 15 MHz of S band based on DVB-H. Since a band adjacent to a terrestrial International Mobile Telecommunication (IMT) band of the S band is used, the integration with a terrestrial IMT part may be readily performed. In addition, the terrestrial network may also be easily reused and thus costs may be reduced. The DVB-SH system considers a hybrid broadcasting structure with the terrestrial network. Also, in order to decrease signal interference between the satellite and the CGC, and to effectively use frequency resources, the DVB-SH system considers a structure where a frequency reuse factor is set to 1 with respect to a CGC cell within a single satellite spot beam, and a frequency reuse factor is set to 3 with respect to the satellite spot beam. In this case, it is possible to broadcast, using the satellite spot beam, nine TV channels covering the entire nation, or to broadcast 27 channels via the terrestrial repeater in an urban area or in an indoor environment.

The terrestrial satellite integrated system of MSV and TerreStar using the ATC is a geostationary orbit (GEO) based mobile satellite communication system to provide a terminal with a ubiquitous wireless wide area network service such as an Internet access, a voice communication, and the like in L band and S band. By using a hybrid radio network structure where a satellite and an ATC are integrated, the GEO-mobile satellite communication system may provide a voice service or a high speed packet service via the ATC, that is, a terrestrial network in urban areas or populated areas, and may also provide a service via the satellite in suburbs or countryside not covered by the ATC. The ATC is in development to provide a satellite service without significantly increasing a complexity of a terrestrial terminal using a radio interface similar to a radio interface of the satellite, and the like.

The satellite communication system in accordance with the embodiments of the present invention may be a personal mobile satellite communication system. The personal mobile satellite communication system may be configured to provide a service via a satellite in suburbs or countryside where a LOS is guaranteed, and to provide the service via an ATC in urban areas or indoor environments where a satellite signal is not guaranteed. At this time, the satellite communication system improves the spectrum use efficiency and the power use efficiency of the hierarchical multi-beams in consideration of a communication environment in which the communication service is provided via the ATC and a communication environment in which the communication service is provided via the satellite. Furthermore, the satellite communication system stably provides the communication service in correspondence to traffic requirements of users to receive the communication service in the multi-service area.

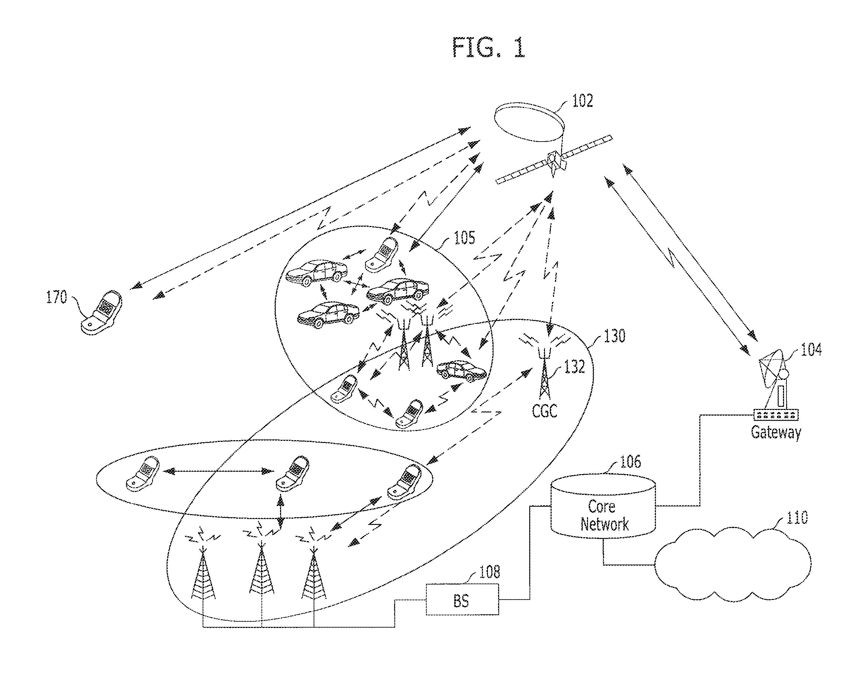

The satellite communication system in accordance with the embodiments of the present invention monitors instant traffic requirements of users existing in the entire satellite coverage, forms multi-beams having coverage sizes corresponding to the traffic requirements, and effectively reuses the frequency among the multi-beams formed in various coverage sizes to provide the communication service. In the embodiments of the present invention, the satellite communication system has commonality with various types of terrestrial communication systems. The satellite communication system may transmit and receive signals to and from all terrestrial systems regardless of access standards such as OFDMA, Code Division Multiple Access (CDMA), and Time Division Multiple Access (TDMA), and may provide a communication service by using multi spot beams. Now, referring to Fig. 1, a service providing system in the communication system in accordance with the embodiment of the present invention will be described in detail.

Fig. 1 is a diagram schematically illustrating the structure of the service providing system in the satellite communication system in accordance with the embodiment of the present invention.

Referring to Fig. 1, the service providing system in the satellite communication system in accordance with the embodiment of the present invention includes a satellite 102, a first terminal 170, a gateway 104, a core network 106, an access network 110, a base station (BS) 108, a CGC 132, and a plurality of terminals. The satellite 102 is a satellite BS configured to provide a communication service by using hierarchical multi-beams. The first terminal 170 is located in a suburb to receive the communication service from the satellite 102. The gateway 104 is configured to connect signal transmission and reception between the satellite 102 and a terrestrial system. The core network 106 is included in the terrestrial system and configured to transmit and receive signals to and from the satellite 102 through the gateway 104. The access network 110 is connected to the core network 106 to provide the communication service. The BS 108 is connected to the core network 106 to provide the communication service to other terminals included in the terrestrial system, and performs a function as a control station. The CGC 132 serving as an ATC of the satellite 102 is configured to provide the communication service to terminals existing in a service area 130 of an urban area. The plurality of terminals are located in a service area 105 between the suburb and the urban area and configured to receive the communication service from the satellite 102.

In the embodiment of the present invention, the satellite 102 as the satellite BS supports and performs a first communication scheme as direction communication between the satellite communication system and the terminals existing in the service area, and may be a GEO satellite which transmits signals through hierarchical multi-beams, for example, a global beam, multi regional beams, and multi spot beams. For convenience of descriptions, a case in which only one satellite exists will be taken as an example. However, other types of satellites as well as a plurality of GEO satellites may exist to provide a communication service. Each of the satellites provides a communication service to terminals by using mono or multi spot beams. For convenience of explanation, it will be described that the satellite communication system forms hierarchical multi-beams, and allocates resources and power of the formed hierarchical multi-beams to provide a communication service to terminals existing in the service area. However, the satellite BS of the satellite communication system, for example, the satellite 102 may form the hierarchical multi-beams and allocate resources and power.

The satellite BS of the satellite communication system monitors the distribution of users existing in the service area, that is, terminals and the traffic volumes of the terminals and forms the hierarchical multi-beams so as to cover the coverage sizes corresponding to the distribution of terminals and the traffic volumes according to the monitoring result. Then, the satellite BS allocates resources and power corresponding to the respective hierarchical multi-beams to provide a communication service to the terminals by transmitting data traffic through the formed hierarchical multi-beams, and provides a communication service to terminals through the allocated resources and power. At this time, the satellite BS minimizes the interference between the hierarchical multi-beams when providing the communication service, while satisfying the QoS, and maximizes the frequency use efficiency and the power use efficiency. Hereafter, for convenience of explanation, it will be described that the satellite communication system performs the operation of the satellite BS.

An area in which the terminals are located may include one spot area, or a plurality of spot group areas by roaming of the terminals. A terminal included in the terrestrial system is connected to the network of the gateway 104 connected to at least one or more satellites and receives the communication service. At this time, the satellite 102 performs communication with the terrestrial system, communication devices included in the terrestrial system, and ATCs through an interface corresponding to an access standard in the terrestrial system. In the embodiment of the present invention, it is assumed that the satellite 102 performs communication with the terrestrial system and the other devices through an OFDMA-based satellite radio interface, for convenience of description.

The gateway 104 may be a centralized gateway or one gateway of geographically distributed gateways, depending on the satellite communication system or requirements from an operator of the satellite communication system. The gateway 104 is connected to the BS 108 as a sub system which is connected to the core network 106 or the access network 110. As described above, the BS 108 performs the same function as that of the BS and the control station used in the terrestrial network, and may be provided in the gateway 104 or outside the gateway 104 as illustrated in Fig. 1.

The satellite communication system reuses the same frequency as the satellite 102 by using an ATC such as the CGC 132 to continuously cover the signal transmission in a shadow region caused by a building or mountain in the service area 103 of the urban area. At this time, the satellite signal of the satellite 102 is amplified through the reused frequency and then transmitted to the terminals existing in the service area 130. That is, the satellite communication system provides a broadcast service or Multimedia Broadcast Multicast Service (MBMS) to the terminals included in the terrestrial system as well as the suburb and the urban area through the satellite 102 or the ATC.

At this time, the satellite communication system provides the MBMS through the satellite 102 in a nationwide coverage such as the suburb or countryside where the LoS is guaranteed, and provides the MBMS through the ATC such as the CGC 132 in the service area 130 of urban areas or indoor environments where a satellite signal is not guaranteed. The repeater performing a function of relaying a satellite signal like the ATC performs only a function of simply relaying a voice and data communication service without providing the voice and data communication service. Therefore, only downward link transmission is considered. When information for providing the MBMS is required, the information is transmitted through the terrestrial network of the terrestrial system.

When the satellite communication system provides the voice and data communication service through limited frequency resources, it is difficult to provide the communication service to all the terminals existing in the multi-service area through a beam having a very large coverage. Therefore, the satellite communication system provides the voice and data communication service to a terminal existing in a region within the service area, which is not covered by the terrestrial network, through the beam. Furthermore, the ATC transmit an upward link signal to the satellite 102 to provide the voice and data communication service or MBMS to a terminal existing in a region within the service area, which is not covered by the terrestrial network and in which a satellite signal is not guaranteed, that is, a terminal which does not exist in the coverage area through the beam.

In the satellite communication system, the terminal existing in the region which is not covered by the terrestrial network receives the communication service from the satellite 102, as described above. When entering the coverage of the terrestrial network, the terminal performs vertical handover between the satellite 102 and the terrestrial network so as to receive the communication service from the terrestrial network having more excellent transmission efficiency than the satellite 102. At this time, the terminal may transmit and receive signals to and from both the terrestrial network and the satellite 102. When the terrestrial network and the satellite 102 transmit and receive signals through different access standards, the terminal transmits and receives signals to and from the terrestrial network and the satellite 102 by using the OFDMA-based satellite radio interface as described above, in order to reduce overhead.

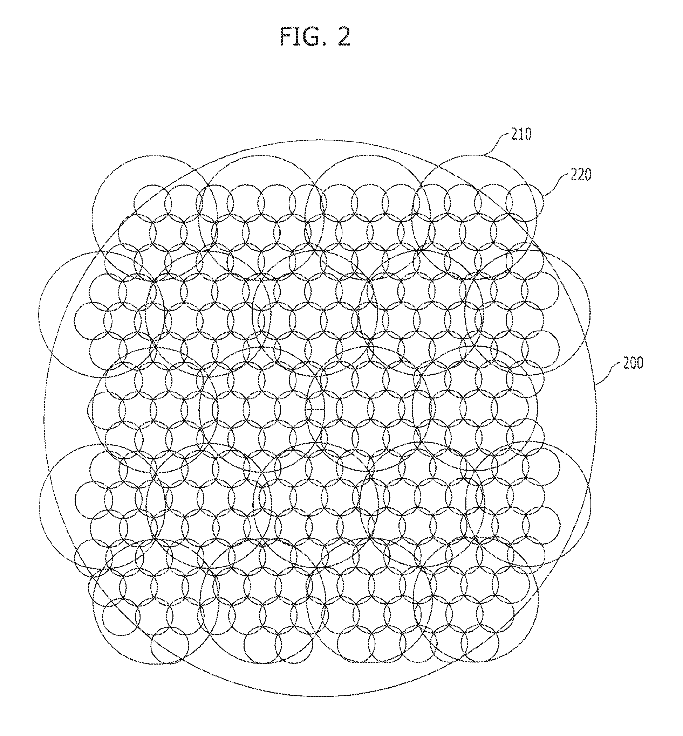

In the satellite communication system, the satellite 102 forms the hierarchical multi-beams through a Multi-Input Multi-Output (MIMO) scheme in which one satellite uses a polarization characteristic of an antenna, or a plurality of satellites form the hierarchical multi-beams and transmit a signal to provide a communication service. Accordingly, the data transmission capacity may be increased, and the data reception function may be improved. The satellite communication system acquires a spatial diversity gain with respect to a slow-fading effect of the satellite 102 through cooperation communication using an ATC and Ad-hoc network formation among the terminals, and effectively uses the limited frequency resources through the hierarchical multi-beams to improve the throughput of the entire system. Furthermore, since the satellite communication system uses the hierarchical multi-beam pattern without using a fixed beam pattern, the power use efficiency in the satellite 102 may be improved, and the communication service may be adaptively provided in correspondence to user requirements. In addition, the interference between adjacent beams in the hierarchical multi-beams may be minimized to improve the frequency reuse efficiency. Now, referring to Fig. 2, the hierarchical multi-beam patterns of the satellite communication system in accordance with the embodiment of the present invention will be described in detail.

Fig. 2 is a diagram schematically illustrating the hierarchical multi-beam pattern of the satellite communication system in accordance with the embodiment of the present invention.

Referring to Fig. 2, the satellite communication system forms hierarchical multi-beams, that is, a global beam 200, multi regional beams 210, and multi spot beams 220. The global beam 200 has the largest coverage size. The multi regional beams 210 have a smaller coverage size than the global beam 200, and are implemented to cover the coverage size of the global beam 200. The multi spot beams 220 have the smallest coverage size, and are implemented to cover the coverage sizes of the multi regional beams 210. In the exemplary embodiment of the present invention, the hierarchical multi-beams are divided into three types as described above. However, two or more types of multi-beams may be formed to provide a communication service, depending on the communication environments and the coverages of service area.

The multi spot beams 220 having the smallest coverage size among the hierarchical multi-beams most effectively reuse limited frequency resources and have a large beam antenna gain. Therefore, the multi spot beams 220 have higher EIRP than the other hierarchical multi-beams. Accordingly, when high-speed traffic is requested in a service area where the number of data processing requests is large or when the number of terminals to receive a communication service is large, the satellite communication system provides the communication service through the multi spot beams 220 having the smallest coverage size.

The satellite communication system should allocate and manage the frequency resources corresponding to terminals which are to receive the communication service through the multi spot beams 220 corresponding to the respective service areas. When providing the communication service through the multi spot beams 220 having the smallest coverage size, on-board processing for providing the service becomes complex, and the frequency resources are independently managed for the respective multi spot beams 220. When the satellite communication system allocates resources and power among the terminals, it may be difficult to adaptively perform the allocation.

Meanwhile, when the satellite communication system provides the communication service through a beam having a larger coverage size than the multi spot beams 220, for example, the global beam 220, the frequency reuse efficiency and the transmission EIRP efficiency are reduced. In this case, it is difficult to transmit a large volume of traffic. However, since the global beam 220 has a large coverage size, the satellite communication system may allocate resources to satisfy requirements of the respective terminals, for example, user traffic requirements when the number of terminals and the traffic volume are small during the resource and power allocation. Furthermore, the power consumption may be minimized to improve the power use efficiency of the satellite communication system.

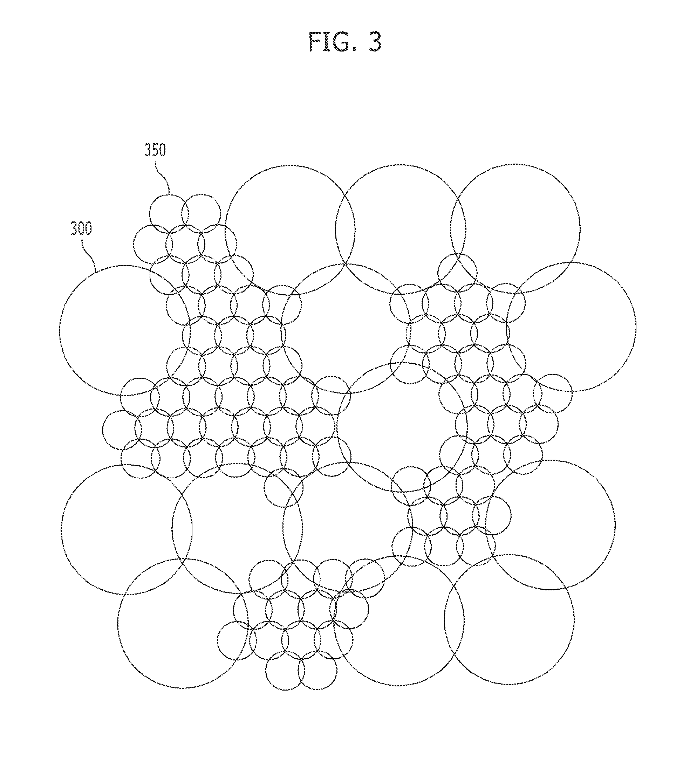

The satellite communication system in accordance with the embodiment of the present invention checks the number of terminals and a traffic volume in a service area. When the traffic volume or the number of terminals to receive the communication service is small, the satellite communication system forms the global beam 200 or the multi regional beams 210 having a large coverage size to provide the communication service. When the traffic volume or the number of terminals to receive the communication service is large, the satellite communication system forms the multi spot beams 220 having a small coverage size to provide the communication service. Now, referring to Fig. 3, another hierarchical multi-beam pattern of the satellite communication system in accordance with the embodiment of the present invention will be described.

Fig. 3 is a diagram schematically illustrating another hierarchical multi-beam pattern of the satellite communication system in accordance with the embodiment of the present invention.

Referring to Fig. 3, the satellite communication system forms hierarchical multi-beams, for example, a global beam, multi regional beams 300, and multi spot beams 350, as described with reference to Fig. 2. For convenience of explanation, the descriptions about providing the communication service through the global beam will be omitted, and the following descriptions will be focused on providing the communication service through the multi regional beams 300 and the multi spot beams 350.

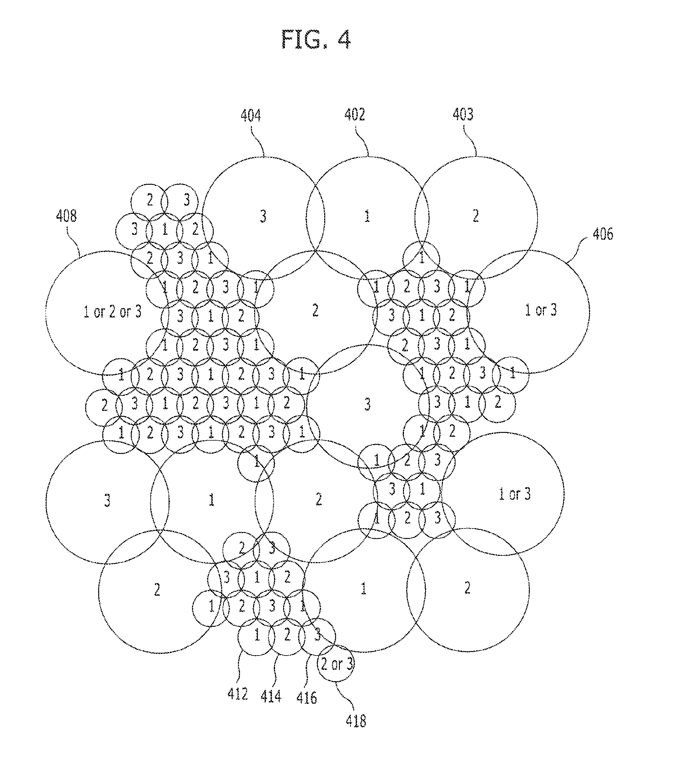

When a traffic volume or the number of terminals to receive a communication service is small, the satellite communication system provides a communication service through the multi regional beams 300. For example, the satellite communication system may provide a communication service through the multi regional beams 300 during the dawn. Furthermore, the satellite communication system provides a communication service through the multi regional beams 300 in a service area such as a countryside or the sea. Accordingly, the satellite communication system allocates resources and power by simplifying on-board processing of the satellite and minimizing the power consumption. When a traffic volume or the number of terminals to receive a communication service is large, the satellite communication system provides a communication service through the multi spot beams 350 having the smallest coverage size, in order to increase the throughput of the entire system. For example, in a service area such as an urban area, the satellite communication system provides a communication service through the multi spot beams 350. Now, referring to Fig. 4, a hierarchical multi-beam pattern for frequency reuse in adjacent beams having different coverage sizes in the satellite communication system in accordance with the embodiment of the present invention will be described.

Fig. 4 is a diagram schematically illustrating another hierarchical multi-beam pattern of the satellite communication system in accordance with the embodiment of the present invention.

Referring to Fig. 4, the satellite communication system forms hierarchical multi-beams, for example, a global beam, multi regional beams, and multi spot beams, as described with reference to Fig. 2. For convenience of explanation, the descriptions about providing the communication service through the global beam will be omitted, and the following descriptions will be focused on providing the communication service through the multi regional beams 402, 403, 404, 406, and 408 and the multi spot beams 412, 414, 416, and 418. The satellite communication system provides a communication service by reusing the frequency between adjacent beams having different coverage sizes, for example, by reusing the frequency between adjacent beams with a frequency reuse factor of 3.

More specifically, the satellite communication system allocates frequencies to the multi spot beams 412, 414, 416, and 418 such that the frequency reuse factor becomes 3. For example, the satellite communication system allocates the frequencies such that the multi spot beam 412 uses a frequency band of which the center frequency is 1, the multi spot beam 414 uses a frequency band of which the center frequency is 2, the multi spot beam 416 uses a frequency band of which the center frequency is 3, and the multi spot beam 418 uses a frequency band of which the center frequency is 2 or 3. Furthermore, the satellite communication system allocates frequencies in such a manner that the multi regional beams 402, 403, 404, 406, and 408 do not use the frequencies used in the adjacent multi spot beams 412, 414, 416, and 418. Then, the multi regional beams 402, 403, 404, 406, and 408 do not interfere in the adjacent multi spot beams 412, 414, 416, and 418. For example, the satellite communication system allocates the frequencies such that the multi regional beam 402 uses a frequency band of which the center frequency is 1, the multi regional beam 403 uses a frequency band of which the center frequency is 2, the multi regional beam 404 uses a frequency band of which the center frequency is 3, the multi regional beam 406 uses a frequency band of which the center frequency is 1 or 3, and the multi regional beam 408 uses a frequency band of which the center frequency is 1, 2, or 3. Then, the satellite communication system reuses the frequencies.

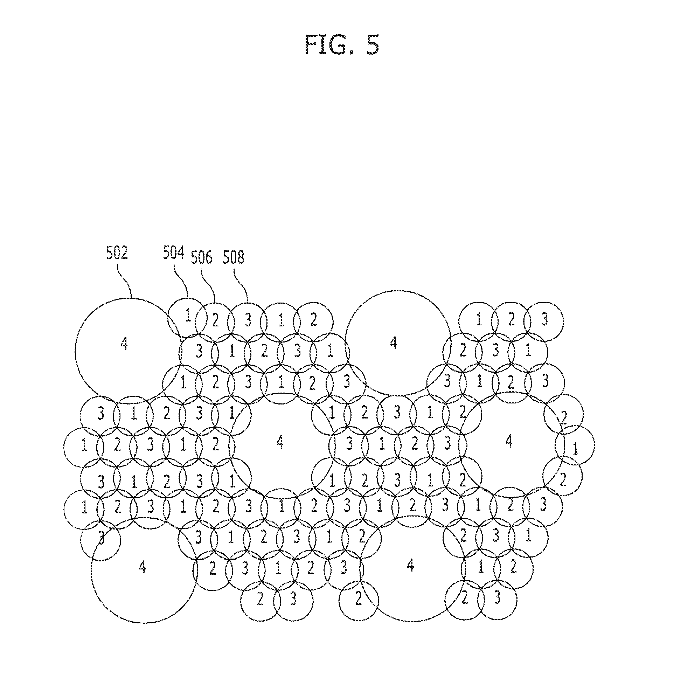

Accordingly, the satellite communication system allocates frequencies such that the adjacent beams have different center frequencies. Therefore, the multi regional beams 402, 403, 404, 406, and 408 are sparsely arranged in the service area such that the interference between the adjacent multi regional beams is reduced. Furthermore, since the multi regional beams 402, 403, 404, 406, and 408 do not use the same frequency as the center frequency of the adjacent multi spot beams 412, 414, 416, and 418, the interference between the multi regional beams 402, 403, 404, 406, and 408 and the multi spot beams 412, 414, 416, and 418 is reduced. Furthermore, since the multi regional beams 402, 403, 404, 406, and 408 exist adjacent to the multi spot beams 412, 414, 416, and 418, the EIRP decreases more than when only the multi spot beams exist. Therefore, the interference between the adjacent beams is reduced. Now, referring to Fig. 5, another hierarchical multi-beam pattern for frequency reuse in adjacent beams having different coverage sizes in the satellite communication system in accordance with the embodiment of the present invention will be described.

Fig. 5 is a diagram schematically illustrating another hierarchical multi-beam pattern of the satellite communication system in accordance with the embodiment of the present invention.

Referring to Fig. 5, the satellite communication system forms hierarchical multi-beams, for example, a global beam, multi regional beams, and multi spot beams, as described with reference to Fig. 2. For convenience of explanation, the descriptions about providing the communication service through the global beam will be omitted, and the following descriptions will be focused on providing the communication service through the multi regional beams 502 and the multi spot beams 504, 506, and 508. The satellite communication system provides a communication service such that adjacent beams having different coverage sizes reuse frequencies. For example, the multi regional beams 502 reuse the frequencies with a frequency reuse factor of 1, and the multi spot beams 504, 506, and 508 reuse the frequencies with a frequency reuse factor of 3.

More specifically, the satellite communication system forms the multi regional beams 502 such that the multi regional beams 502 do not overlap each other, and then allocates frequencies such that the multi regional beams 502 use a frequency other than the frequencies used by the multi spot beams 504, 506, and 508 as a frequency reuse factor of 1. The satellite communication system allocates the frequencies such that the multi regional beams 502 use a frequency other than the frequencies used by the multi spot beams 504, 506, and 508, for example, a frequency band of which the center frequency is 4, as a frequency reuse factor of 1. Furthermore, the satellite communication system allocates frequencies to the multi spot beams 504, 506, and 508 such that the frequency reuse factor becomes 3. For example, the satellite communication system allocates the frequencies such that the multi spot beam 504 uses a frequency band of which the center frequency is 1, the multi spot beam 506 uses a frequency band of which the center frequency is 2, and the multi spot beam 508 uses a frequency band of which the center frequency is 3.

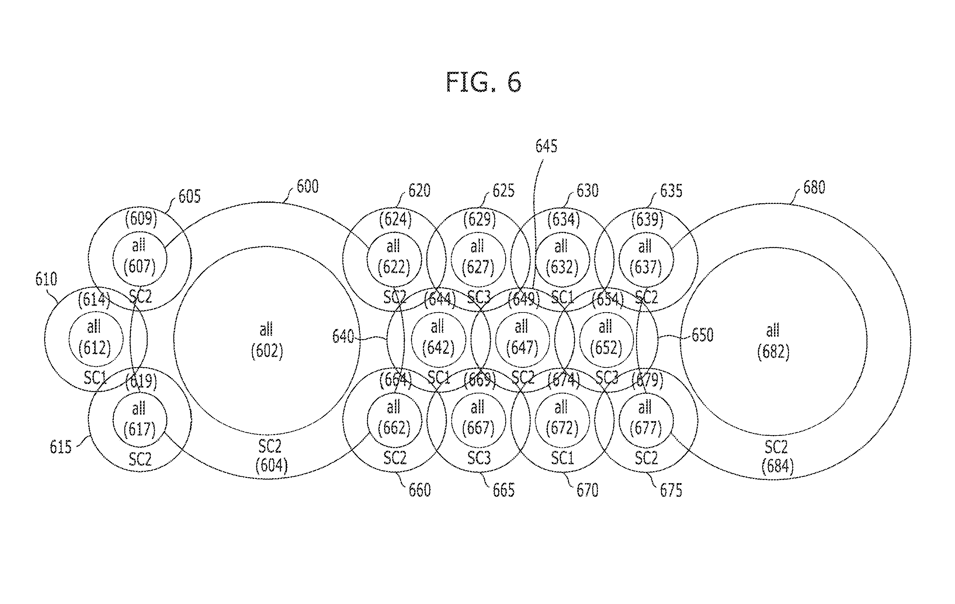

Accordingly, as the multi regional beams 502 do not overlap each other with the frequency reuse factor of 1, the satellite communication system minimizes the interference between the multi regional beams and maximizes the frequency use efficiency. Furthermore, as the multi spot beams 504, 506, and 508 adjacent to the multi regional beams 502 use frequency bands having different center frequencies to provide the communication service, the interference between the multi regional beams 502 and the multi spot beams 504, 506, and 508 is minimized. Now, referring to Fig. 6, another hierarchical multi-beam pattern for reusing frequency-band subcarriers based on the OFDMA scheme in the satellite communication system in accordance with the embodiment of the present invention will be described.

Fig. 6 is a diagram schematically illustrating another hierarchical multi-beam pattern of the satellite communication system in accordance with the embodiment of the present invention.

Referring to Fig. 6, the satellite communication system forms hierarchical multi-beams, for example, a global beam, multi regional beams, and multi spot beams, as described with reference to Fig. 2. For convenience of explanation, the descriptions about providing the communication service through the global beam will be omitted, and the following descriptions will be focused on providing the communication service through the multi regional beams 600 and 680 and the multi spot beams 605, 610, 615, 620, 625, 630, 635, 640, 645, 650, 660, 665, 670, and 675. The satellite communication system allocates frequencies such that the frequency reuse factor becomes 1 in the center area of each beam. That is, the satellite communication system allocates the frequencies to provide a communication service through all subcarriers of available frequencies. In the edge area of each beam, available frequencies are divided into a plurality of subcarrier groups, for example, three subcarrier groups including a first carrier group SC1, a second carrier group SC2, and a third carrier group SC2. Then, the satellite communication system allocates the frequencies to provide a communication service through a predetermined subcarrier group among the divided subcarrier groups such that the interference between the adjacent beams is minimized.

More specifically, the satellite communication system allocates the frequencies to provide the communication service to terminals located in the center areas of the multi regional beams 600 and 680 through all subcarriers 602 and 682 in available frequency bands. Furthermore, the satellite communication system allocates the frequencies to provide the communication service to terminals located in the center areas of the multi spot beams 605, 610, 615, 620, 625, 630, 635, 640, 645, 650, 660, 665, 670, and 675 through all subcarriers 607, 612, 617, 622, 627, 632, 637, 642, 647, 652, 662, 667, 672, and 677 in available frequency bands. In addition, the satellite communication system allocates the frequencies to provide the communication service to terminals located in the edge areas of the multi regional beams 600 and 608 through the third subcarrier group 604 and the first carrier group 684. Furthermore, the satellite communication system allocates the frequencies to provide the communication service to terminals located in the edge areas of the multi spot beams 605, 610, 615, 620, 625, 630, 635, 640, 645, 650, 660, 665, 670, and 675 through the first subcarrier groups 614, 634, 644, and 674, the second subcarrier groups 609, 619, 624, 639, 649, 664, and 679, and the third subcarrier groups 629, 654, and 669.

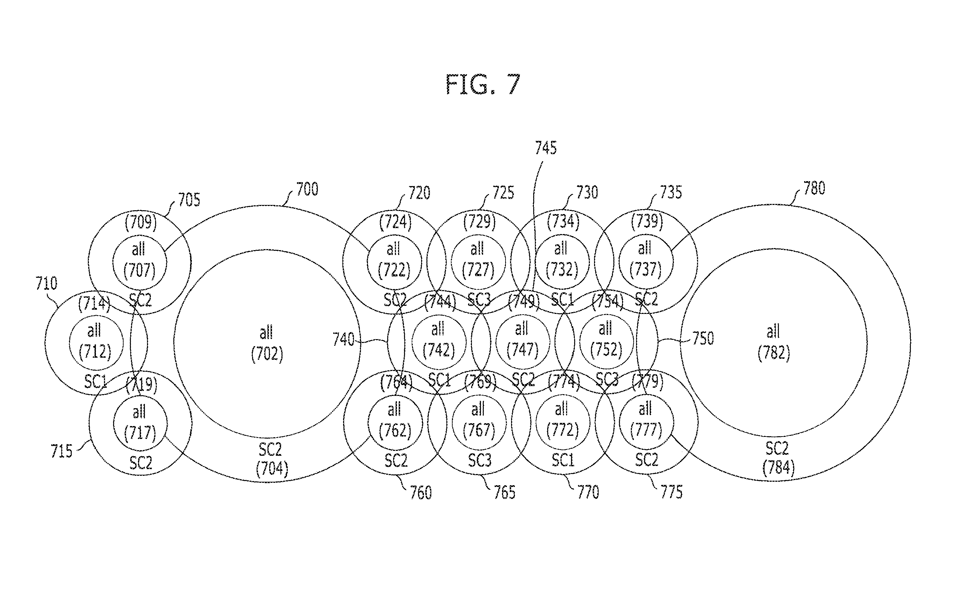

Since the satellite communication system allocates the frequencies to provide the communication service to terminals located in the center areas of the multi regional beams 600 and 680 and the multi spot beams 605, 610, 615, 620, 625, 630, 635, 640, 645, 650, 660, 665, 670, and 675 through all subcarriers, the frequency use efficiency is maximized as the frequency reuse factor of 1, and the interference between the adjacent beams is minimized in all subcarriers allocated in the center areas of the respective beams. Furthermore, since the satellite communication system allocates the frequencies to provide the communication service through the subcarrier group which do not overlap the subcarrier groups in the edge areas of the beams adjacent to the edge areas of the multi regional beams 600 and 680 and the multi spot beams 605, 610, 615, 620, 625, 630, 635, 640, 645, 650, 660, 665, 670, and 675, the interference between the adjacent beams is minimized. Now, referring to Fig. 7, another hierarchical multi-beam pattern for reusing frequency-band subcarriers based on the OFDNA scheme in the satellite communication system in accordance with the embodiment of the present invention will be described.

Fig. 7 is a diagram schematically illustrating another hierarchical multi-beam pattern of the satellite communication system in accordance with the embodiment of the present invention.

Referring to Fig. 7, the satellite communication system forms hierarchical multi-beams, for example, a global beam, multi regional beams, and multi spot beams, as described with reference to Fig. 2. For convenience of explanation, the descriptions about providing the communication service through the global beam will be omitted, and the following descriptions will be focused on providing the communication service through the multi regional beams 700 and 780 and the multi spot beams 705, 710, 715, 720, 725, 730, 735, 740, 745, 750, 760, 765, 770, and 775. The satellite communication system allocates frequencies such that the frequency reuse factor becomes 1 in the center area of each beam. That is, the satellite communication system allocates the frequencies to provide a communication service through all subcarriers of available frequencies. In the edge area of each beam, available frequencies are divided into a plurality of subcarrier groups, for example, four subcarrier groups including a first carrier group SC1, a second carrier group SC2, a third carrier group SC3, and a fourth carrier group SC4. The satellite communication system allocates the frequencies to provide a communication service through a predetermined subcarrier group among the divided subcarrier groups such that the interference between the adjacent beams is minimized.

More specifically, the satellite communication system allocates the frequencies to provide the communication service to terminals located in the center areas of the multi regional beams 700 and 780 through all subcarriers 702 and 782 in available frequency bands. Furthermore, the satellite communication system also allocates the frequencies to provide the communication service to terminals located in the center areas of the multi spot beams 705, 710, 715, 720, 725, 730, 735, 740, 745, 750, 760, 765, 770, and 775 through all subcarriers 707, 712, 717, 722, 727, 732, 737, 742, 747, 752, 762, 767, 772, and 777 in available frequency bands. In addition, the satellite communication system allocates the frequencies to provide the communication service to terminals located in the edge areas of the multi regional beams 700 and 708 through the fourth subcarrier groups 704 and 784. Furthermore, the satellite communication system allocates the frequencies to provide the communication service to terminals located in the edge areas of the multi spot beams 705, 710, 715, 720, 725, 730, 735, 740, 745, 750, 760, 765, 770, and 775 through the first subcarrier groups 714, 734, 744, and 774, the second subcarrier groups 709, 719, 724, 739, 749, 764, and 779, and the third subcarrier groups 729, 754, and 769.

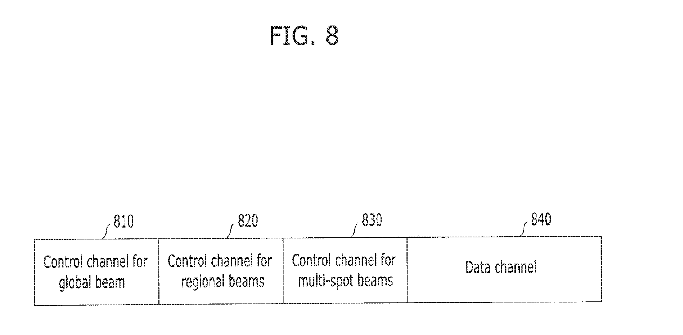

Since the satellite communication system allocates the frequencies to provide the communication service to terminals located in the center areas of the multi regional beams 700 and 780 and the multi spot beams 705, 710, 715, 720, 725, 730, 735, 740, 745, 750, 760, 765, 770, and 775 through all subcarriers, the frequency use efficiency is maximized as the frequency reuse factor of 1, and the interference between the adjacent beams is minimized in all subcarriers allocated in the center areas of the respective beams. Furthermore, since the satellite communication system allocates the frequencies to provide the communication service through the subcarrier group which do not overlap the subcarrier groups in the edge areas of the beams adjacent to the edge areas of the multi regional beams 700 and 780 and the multi spot beams 705, 710, 715, 720, 725, 730, 735, 740, 745, 750, 760, 765, 770, and 775, the interference between the adjacent beams is minimized. In addition, the satellite communication system allocates the fourth subcarrier group, which is not used in the edge areas of the multi spot beams 705, 710, 715, 720, 725, 730, 735, 740, 745, 750, 760, 765, 770, and 775, to the edge areas of the multi regional beams 700 and 780. Therefore, the interference between the multi regional beams 700 and 780 and the adjacent multi spot beams is minimized. Furthermore, the satellite communication system reuses the fourth subcarrier group in the edge areas or the multi regional beams 700 and 780, with the frequency reuse factor of 1. Therefore, the frequency use efficiency increases. Now, referring to Fig. 8, channels for transmitting the resource and power allocation information of the hierarchical multi-beams for providing a communication service in the satellite communication system in accordance with the embodiment of the present invention will be described.

Fig. 8 is a diagram schematically illustrating the channel structure of the satellite communication system in accordance with the embodiment of the present invention.

Referring to Fig. 8, the satellite communication system forms hierarchical multi-beams, for example, a global beam, multi regional beams, and multi spot beams, allocates frequencies to the formed hierarchical multi beams as described with reference to Figs. 2 to 7, and allocates power to the formed hierarchical multi-beams to provide a communication service through the allocated frequencies. Then, the satellite communication service transmits the resource and power allocation information of the hierarchical multi-beams to terminals existing in a service area through control channels 810, 820, and 830, and provides a communication service by transmitting data traffic to the terminals through a data channel 840.

More specifically, the satellite communication system transmits the frequency allocation information and the power allocation information of the global beam to the terminals through the first control channel 810, transmits the frequency allocation information and the power allocation information of the regional beams to the terminals through the second control channel 820, and transmits the frequency allocation information and the power allocation information of the multi spot beams to the terminals through the third control channel 830. Furthermore, the satellite communication system provides a communication service by transmitting data traffic to the terminals through the data channel 840. The control channels 810, 820, and 830 transmit the information by multiplexing times, frequencies, and symbols with the data channel 840. Fig. 8 shows the time-multiplexed control channels 810, 820, and 830 and the data channel 840.

The terminals which are to receive the communication service from the satellite communication system first attempt an access through the multi spot beams, and then check their resource allocation information in the first control channel 810 including the allocation information of the global beam in the hierarchical multi beams. When the resource allocation information corresponding to the terminals does not exist, the terminals check their resource allocation information in the second control channel 820 including the allocation information of the regional beams in the hierarchical multi beams. When the resource allocation information corresponding to the terminals does not exist, the terminals check their resource allocation information in the third control channel 830 including the allocation information of the multi spot beams in the hierarchical multi beams.

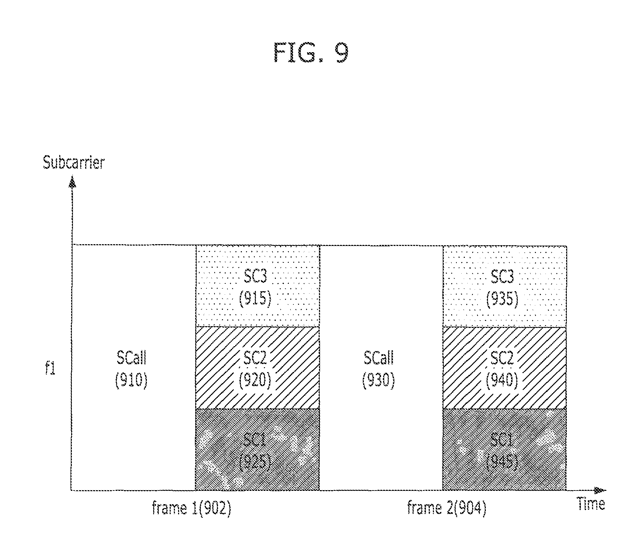

The terminals having checked the allocation information corresponding thereto from the control channels 810, 820, and 830 receive the communication service by receiving data traffic from the data channel 840 through the corresponding beam based on the checked allocation information. Now, referring to Fig. 9, a frame structure when the satellite communication system in accordance with the embodiment of the present invention provides the communication service through the hierarchical multi-beams will be described in detail.

Fig. 9 is a diagram schematically showing the frame structure of the satellite communication system in accordance with the embodiment of the present invention. Fig. 9 schematically shows the frame structure when the satellite communication system in accordance with the embodiment of the present invention provides a communication service through the hierarchical multi beam pattern, in order to all subcarrier reuse in a frequency band based on the OFDMA scheme as described with reference to Fig. 6. In Fig. 9, an available frequency band in the satellite communication system is divided into three subcarrier groups including the first to third subcarrier groups, and the divided subcarrier groups are allocated to the edge areas of the hierarchical multi beams. As described with reference to Fig. 7, however, the frequency band may be divided into four or more subcarrier groups.

Referring to Fig. 9, the satellite communication system divides time slots of predetermined frames, for example, first and second frames 902 and 904. Then, the satellite communication system provides a communication service through all subcarrier regions 910 and 930 of the first time slots in the center areas of the hierarchical multi-beams. Furthermore, the satellite communication system divides the second time slots into a plurality of subcarrier group regions, for example, first subcarrier group regions 925 and 945, second subcarrier group regions 920 and 940, and third subcarrier group regions 915 and 935. Then, the satellite communication system provides a communication service through the divided subcarrier group regions 925, 945, 920, 940, 915, and 935 in the edge areas of the hierarchical multi-beams.

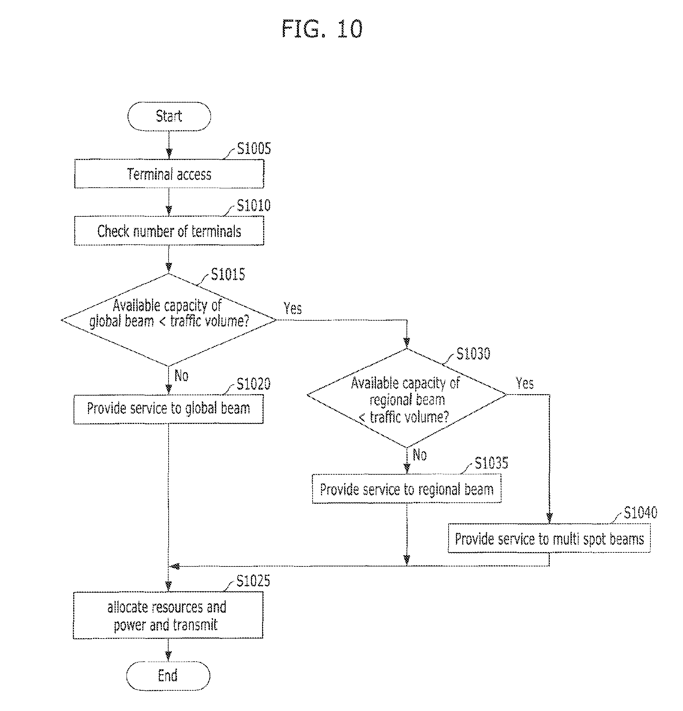

The satellite communication system transmits data traffic to terminals existing in the center areas of the respective beams through the subcarrier group regions 910 and 930 of the first time slots with the frequency reuse factor of 1, and transmit data traffic to terminals by minimizing the interference between the adjacent beams in the edge areas of the respective beams through the subcarrier group regions 925, 945, 920, 940, 915, and 935 of the second time slots. Furthermore, when the subcarrier group regions are divided into less or more than three subcarrier group regions, the satellite communication system divides the second time slots into a corresponding number of subcarrier group regions, and allocates the subcarrier group regions to the edge areas of the respective beams to provide the communication service. The size of the subcarrier regions 910 and 930 in the first time slots and the size of the subcarrier group regions 925, 945, 920, 940, 915, and 935 in the second time slots are decided according to traffic volumes in the center and edge areas of the hierarchical multi-beams, that is, the number of terminals existing in the respective regions and the traffic volumes of the respective terminals. Now, referring to Fig. 10, the operation for providing the communication service through the hierarchical multi-beams in the satellite communication system in accordance with the embodiment of the present invention will be described.

Fig. 10 is a flowchart explaining the operation for providing the communication service in the satellite communication system in accordance with the embodiment of the present invention.

Referring to Fig. 10, terminals which exist in a service area and are to receive a communication service first attempt an access through multi spot beams at step S1005. Then, the satellite communication system checks the number of terminals and data traffic volumes to be transmitted to the terminals at step S1010. More specifically, the satellite communication system monitors the distribution of users to receive the communication service in the service area, that is, terminals and the traffic volumes of the terminals. At this time, the terminals transmit a service request signal through an upward link by using the multi spot beams having a coverage size to cover the area in which the terminals are located. In other words, the terminals transmit a service request signal including information on the communication service which the terminals are to receive from the satellite communication system, for example, service type information to decide the traffic volumes of the terminals. Furthermore, the satellite communication system checks the number of terminals having requested the communication service through the multi spot beams of the upward link and the traffic volumes for the respective multi spot beams of the upward link.

At step S1015, the satellite communication system calculates the total traffic volume required in the coverages for the respective multi spot beams within the service area from the checked number of terminals and the traffic volumes of the respective terminals, and compares the calculated total traffic volume with an available capacity of a beam having the largest coverage size among the hierarchical multi-beams, for example, the global beam. In other words, the satellite communication system calculates the number of terminals to receive the communication service within the beam coverages for the respective multi spot beams and the total traffic volume by using the signals transmitted by the respective terminals through the upward link. Then, the satellite communication system calculates the total traffic volume required in beams having a larger coverage size than the multi spot beams, that is, the global beam and the multi regional beams on the basis of the total traffic volume required in the multi spot beams, and compares the calculated traffic volume with the available capacity of the global beam as the highest level beam.

As the comparison result of the step S1015, when the total traffic volume is smaller than the available capacity of the global beam, that is, when the coverage depending on the number of terminals existing in the service area and the traffic volumes of the terminals is smaller than the coverage size of the global beam, the satellite communication system decides to provide the communication service to the terminals existing in the service area through the global beam at step S1020. That is, since the calculated total traffic volume does not exceed the available capacity which may be provided through the global beam, the satellite communication system provides the communication service by performing communication with all the terminals existing in the service area through the global beam.

At step S1025, the satellite communication system allocates resources and power to maximize the frequency use efficiency at the minimum power during the communication service, while satisfying the QoS of the terminals receiving the communication service through the global beam. Then, as described above, the satellite communication system provides the communication service to the terminals by transmitting the resource and power allocation information through the control channels.

As the comparison result of the step S1015, when the total traffic volume is larger than the available capacity of the global beam, that is, when the coverage depending on the number of terminals existing in the service area and the traffic volumes of the terminals is larger than the coverage size of the global beam, the satellite communication system compares the total traffic volume with available capacities of lower level beams than the global beam, that is, the multi regional beams at step S1030. At this time, the total traffic volume is compared with the available capacities of the multi regional beams, respectively.

As the comparison result of the step S1030, when the total traffic volume is smaller than the available capacity of the regional beam, that is, when the coverage depending on the number of terminals existing in the service area and the traffic volumes of the terminals is smaller than the coverage size of the regional beam, the satellite communication system decides to provide a communication service to the terminals existing in the service area through the regional beam at step S1035. That is, since the calculated total traffic volume does not exceed the available capacity of the regional beam, the satellite communication system provides the communication service by performing the communication with all the terminals existing in the service area through the regional beam.

At step S1025, the satellite communication system allocates resources and power to maximize the frequency use efficiency at the minimum power during the communication service, while satisfying the QoS of the terminals receiving the communication service through the regional beam. Then, as described above, the satellite communication system provides the communication service to the terminals by transmitting the resource and power allocation information through the control channels.

The satellite communication system allocates frequency bands having different center frequencies between the adjacent multi regional beams such that the interference between the adjacent beams is minimized, or allocates frequency bands having different center frequencies from the adjacent multi spot beams. Furthermore, the satellite communication system divides available frequency bands into a plurality of subcarrier groups based on the OFDMA scheme Then, the satellite communication system allocates all subcarriers in available frequency bands to the center area of the regional beam, and allocates a subcarrier group, which is not allocated to the edge areas of the adjacent multi spot beams, among the divided subcarrier groups to the edge area of the regional beam.

As the comparison result of the step S1030, when the total traffic volume is larger than the available capacity of the regional beam, that is, when the coverage depending on the number of terminals existing in the service area and the traffic volumes of the terminals is larger than the coverage size of the regional beam, the satellite communication system decides to provide the communication service to the terminals existing in the service area through the lower level beams than the regional beam, that is, the multi spot beams at step S1040. That is, since the calculated total traffic volume does not exceed the available capacities of the multi spot beams, the satellite communication system provides the communication service by performing the communication with all the terminals existing in the service area through the multi spot beams.

At step S1025, the satellite communication system allocates resources and power to maximize the frequency use efficiency at the minimum power during the communication service, while satisfying the QoS of the terminals receiving the communication service through the multi spot beams. Then, as described above, the satellite communication system provides the communication service to the terminals by transmitting the resource and power allocation information through the control channels.

The satellite communication system allocates frequency bands having different center frequencies between the adjacent multi regional beams such that the interference between the adjacent beams is minimized, or allocates frequency bands having different center frequencies from the adjacent multi spot beams. Furthermore, the satellite communication system divides available frequency bands into a plurality of subcarrier groups based on the OFDMA scheme. Then, the satellite communication system allocates all subcarriers in available frequency bands to the center areas of the multi spot beams, and allocates a subcarrier group, which is not allocated to the edge areas of the adjacent regional beams and the adjacent multi spot beams, among the divided subcarrier groups to the edge areas of the multi spot beams.

In accordance with the embodiments of the present invention, when providing a service based on multi-beams, the satellite communication system discriminates the center areas and the edge areas of the multi-beams to provide the communication service. Therefore, the beam interference occurring in the multi-service area and the plurality of users may be minimized, which makes it possible to stably provide the service. Furthermore, when providing a service through limited resources, the satellite communication system discriminates the center areas and the edge areas of the multi-beams to minimize the beam interference. Accordingly, the use efficiency of the limited resources may be maximized. Furthermore, the satellite communication system provides the service through the beams corresponding to the center areas and the edge areas. Accordingly, the power consumption of the system may be reduced, which makes it possible to improve the power use efficiency.

While the present invention has been described with respect to the specific embodiments, it will be apparent to those skilled in the art that various changes and modifications may be made without departing from the spirit and scope of the invention as defined in the following claims.

## Claims

1. A service providing method in a satellite communication system, comprising:
receiving service request signals from terminals which exist in a service area and are to receive the communication service;
calculating the total traffic volume within the service area by using the service request signals;
forming hierarchical multi beams which cover the calculated traffic volume to provide a service to the terminals; and
allocating resources and power to the formed hierarchical multi beams, transmitting the resource and power allocation information to the terminals through control channels, and providing the service to the terminals through the formed hierarchical multi beams by using the allocated resources and power.

2. The service providing method of claim 1, wherein said forming hierarchical multi beams which cover the calculated traffic volume to provide the service to the terminals comprises:
forming the hierarchical multi beams having different coverage sizes depending on the calculated total traffic volume;
sequentially comparing the calculated total traffic volume with available capacities of the hierarchical multi beams, which are decided in correspondence to the coverage sizes of the formed hierarchical multi beams, from the highest level multi beams in the formed hierarchical multi beams; and
deciding the hierarchical multi beams for providing the service to the terminals according to the comparison result.

3. The service providing method of claim 2, wherein said forming the hierarchical multi beams having different coverage sizes depending on the calculated total traffic volume comprises:
when the calculated total traffic volume does not exceed the available capacity of predetermined level multi beams in the hierarchical multi beams, deciding to provide the service to the terminals through the predetermined level multi beams; and
when the calculated total traffic volume exceeds the available capacity of the predetermined level multi beams, comparing the calculated total traffic volume with the available capacity of the next level multi beams to the predetermined level multi beams.

4. The service providing method of claim 1, 2, or 3 wherein, in said allocating resources and power to the formed hierarchical multi beams, transmitting resource and power allocation information to the terminals through control channels, and providing the communication service to the terminals through the formed hierarchical multi beams by using the allocated resources and power,
frequency bands having different center frequencies are allocated to adjacent beams in the service area, among the formed hierarchical multi beams.

5. The service providing method of one of claims 1 to 4, wherein said allocating resources and power to the formed hierarchical multi beams, transmitting resource and power allocation information to the terminals through control channels, and providing the communication service to the terminals through the formed hierarchical multi beams by using the allocated resources and power comprises:
dividing subcarriers at an available frequency in the service area into a plurality of subcarrier groups; and
allocating all subcarriers at the available frequency to the center areas of the formed hierarchical multi beams, and allocating different subcarrier groups to the edge areas of the adjacent beams in the service area among the formed hierarchical multi beams.

6. The service providing method of one of claims 1 to 4, wherein said allocating resources and power to the formed hierarchical multi beams, transmitting resource and power allocation information to the terminals through control channels, and providing the communication service to the terminals through the formed hierarchical multi beams by using the allocated resources and power comprises:
dividing a time slot of a frame providing the service to the terminals into first and second time slots, and dividing subcarriers of the second time slot into a plurality of subcarrier groups; and
allocating all subcarriers of the first time slot to the center areas of the formed hierarchical multi beams, and allocating different subcarrier groups to the edge areas of the adjacent beams in the service area among the formed hierarchical multi beams.

7. The service providing method of one of claims 1 to 6, wherein, in said receiving service request signals from terminals which exist in the service area and are to receive the communication service,
the service request signals including traffic information of the respective terminals are received through an upward link using the lowest level multi beams among the formed hierarchical multi beams.

8. The service providing method of one of claims 1 to 7, wherein, in said calculating the total traffic volume within the service area by using the service request signals,
the number of terminals to receive the service in the service area and the traffic volumes of the respective terminals are checked, and the total traffic volume required in the service area is calculated from the checked number of terminals and the checked traffic volumes of the respective terminals.

9. A service providing system in a satellite communication system, comprising:
a plurality of terminals existing in a service area and configured to access the satellite communication system by using one scheme of a first communication scheme and a second communication scheme using an ancillary terrestrial component (ATC) or a network; and
a satellite base station configured to receive service request signals from the terminals to receive the service in the service area, calculate the total traffic volume in the service area by using the service request signals, and providing the service to the service area through hierarchical multi beams covering the calculated total traffic volume.

10. The service providing system of claim 9, wherein the satellite base station forms the hierarchical multi beams having different coverage sizes depending on the calculated total traffic volume, allocates resources and power to the formed hierarchical multi beams, transmits the resource and power allocation information to the service area through control channels corresponding to the formed hierarchical multi beams, respectively, and provides the service through the formed hierarchical multi beams using the allocated resources and power.

11. The service providing system of claim 10, wherein the satellite base station allocates frequency bands having different center frequencies to the adjacent beams in the service area among the formed hierarchical multi beams.

12. The service providing system of claim 10, wherein the satellite base station divides subcarriers at an available frequency in the service area into a plurality of subcarrier groups and allocates all subcarriers at the available frequency to the center areas of the formed hierarchical multi beams, and allocates different subcarrier groups to the edge areas of the adjacent beams in the service area among the formed hierarchical multi beams.

13. The service providing system of claim 10, wherein the satellite base station divides a time slot of a frame providing the service to the service area into first and second time slots, and dividing subcarriers of the second time slot into a plurality of subcarrier groups, allocates all subcarriers of the first time slot to the center areas of the formed hierarchical multi beams, and allocates different subcarrier groups to the edge areas of the adjacent beams in the service area among the hierarchical multi beams.

14. The service providing system of one of claims 9 to 13, wherein the satellite base station sequentially compares the calculated total traffic volume with available capacities of the hierarchical multi beams, which are decided in correspondence to the coverage sizes of the formed hierarchical multi beams, from the highest level multi beams in the formed hierarchical multi beams.

15. The service providing system of claim 14, wherein when the calculated total traffic volume does not exceed the available capacity of predetermined level multi beams in the hierarchical multi beams, the satellite base station decides to provide the service through the predetermined level multi beams, and
when the calculated total traffic volume exceeds the available capacity of the predetermined level multi beams, the satellite base station compares the calculated total traffic volume with the available capacity of the next level multi beams to the predetermined level multi beams.
